# NEW EUROPEAN PATENT SPECIFICATION

(11) **EP 1 215 939 B2**
(45) Date of publication and mention of the opposition decision: **17.09.2008**
(45) Mention of the grant of the patent: 11.05.2005
(21) Application number: 01310162.1
(22) Date of filing: 05.12.2001
(51) Int. Cl.: H05B 3/26, H05B 1/02, A47J 27/21, H01H 37/04, H05B 3/82

(54) **Liquid heating vessels**
Heizgefässe für Flüssigkeiten
Recipients de chauffage de liquide

(30) Priority: 06.12.2000 GB 0029771
(43) Date of publication of application: 19.06.2002
(60) Divisional application: 05006499.7
(73) Proprietor: STRIX LIMITED, Ronaldsway, Isle of Man IM9 2RG (GB)
(72) Inventor: Taylor, John Crawshaw, Castletown Isle of Man IM9 1HA (GB); Donnelly, Vernon James, Braddan Isle of Man IM2 1NL (GB); Scott, Michael James, Port St. Mary Isle of Man IM9 5PH (GB)
(74) Representative: Samuels, Adrian James

(56) References cited:
- EP-A- 0 063 665
- EP-A- 0 179 317
- EP-A- 0 285 839
- EP-A- 0 700 654
- EP-A- 1 048 255
- EP-A- 1 201 933
- WO-A-00/24300
- WO-A-95/34187
- WO-A-99/63789
- DE-A- 3 320 474
- DE-A- 19 825 161
- DE-A- 19 933 013
- DE-U1- 9 102 908
- GB-A- 938 195
- GB-A- 2 285 710
- GB-A- 2 308 537
- GB-A- 2 316 848
- GB-A- 2 330 290
- US-A- 3 826 898
- US-A- 4 264 539
- US-A- 4 270 067
- US-A- 6 080 968
- US-A- 6 153 859
- Katalog der Fritz Eichenauer GmbH+Co.KG; Ausgabe/Edition 1995, auszugsweise "Anwendungsbeispiele"
- Zeichnungen der ausgelieferten Heizbasen
- Lieferschein der "Fritz Eichernauer GmbH + Co. KG" vom 05.01.1998
- Lieferschein der "Fritz Eichernauer GmbH + Co. KG" vom 19.07.2000

## Description

The present invention relates to liquid heating vessels, and in particular to liquid heating vessels having sheathed heating elements attached to the underside of the base of the vessel to heat liquid in the vessel.

An example of such a liquid heating vessel is disclosed in EP-A-63665 (SEB) in the arrangement disclosed in that document, the heating element is mounted to the base of the liquid heating vessel via a heat diffusion plate of aluminium or a similar highly conductive metal. The heat diffusion plate acts to diffuse heat from the heating element over the base of the heating vessel.

In typical liquid heating vessels a thermally sensitive control is provided so as to prevent the heater overheating in the event that the vessel is switched on dry or boils dry. In arrangements as described above, a thermally sensitive control is also mounted on the heat diffusion plate.

DE-U-9102908.2 discloses a liquid heating vessel according to the preamble of claim 1.

US A 270067 discloses an electric frying pan having a heated base. EP-A-0700654 discloses a liquid heating vessel having a peripheral step receiving an element.

The Applicants have realised that, in fact, the effect of the heat diffusion plate is relatively limited, acting, in practice, to provide limited radial diffusion of heat from the heating element. Accordingly, it may effectively be dispensed with. However, means must be provided for permitting effective sensing of overheating of the heater in the event of a dry boil or switch on dry situation.

The Applicants have sought to provide such an arrangement. The present invention provides a liquid heating vessel as claimed in claim 1.

Thus in accordance with the invention heat is transferred directly into the base of the liquid heating vessel without the need for a heat diffusion plate. A heat conduction member arranged over and in good thermal contact with the heating element, and also in thermal contact with the vessel base, allows heat to be conducted to a thermally sensitive control which can sense when the heater is overheating. It is important that the heat conduction member is in thermal contact both with the heating element and with the base of the heating vessel since during normal operation of the heater, the vessel base will act to keep the temperature of the heat conduction member plate at a lower temperature thereby preventing accidental operation of a control, mounted thereon during heating of liquid in the vessel.

Preferably, the heat conduction member comprises a strip or plate mounted over a portion of the heating element. The plate is preferably of a material having a high thermal conductivity, for example, of aluminium, copper, or alloys thereof.

The conduction member plate need only engage a relatively small portion of the heating element in order to perform its function. Accordingly, in a preferred embodiment the heat conduction member need only engage a limited circumferential extent of the element. Typically, this will be less than 90°, preferably around 45° circumferentially of the heating element.

The conduction member preferably extends over at least half the radial width of the portion of the heating element, and most preferably over the entire width of the portion. Indeed, in a preferred embodiment, the conduction member extends radially beyond the element and is attached to the vessel base beyond the element.

The conduction member may be provided with suitable locating means for assisting its accurate location on the heater and vessel base. The locating means may engage with the heating element and/or the base of the vessel itself. In the preferred embodiment, the vessel base is dish shaped, and the conduction member extends at least partially up the side of the dish for location.

A plurality of heat conduction members may be provided for receiving a plurality of thermal control means. In a preferred embodiment a single conduction member comprises mounting locations for a plurality of thermally sensitive control means.

In the preferred embodiment, the arrangement is adapted for use with a thermally sensitive control having a pair of thermally sensitive actuators. An example of such a control is the Applicant's U17 or U18 control. In this embodiment, the thermal conduction member preferably extends across the base of the heating vessel and engage with respective opposed portions of the heating element. The respective mounting locations for the control actuators are, therefore, linked by a central bridge of material.

The conduction member may be apertured both to save material costs and to manage the heat flow within the member. For example the conduction member may be provided with apertures, eg slots, extending around the actuator mounting locations so as to prevent heat transfer into the central region of the vessel base, which is unnecessary, and concentrate heat in the region of the actuator mounting locations.

The apertures are preferably slots and in one embodiment may be arcuate.

The heat conduction member of the invention may also be provided with means for mounting a control thereon. Accordingly, the heat conduction member may be provided with one or more tabs or other mounting locations for a control.

Preferably the heat conduction member is brazed or soldered in position on the element and heating vessel base. In order to facilitate this procedure, the conduction plate is preferably provided with one or more apertures which allows the escape of fluxes etc. during the bonding process.

In a preferred embodiment, the element and the conduction member may be coated with solder paste and located together on the vessel base and the assembly then heated to solder the plate and element in position.

The element and the conduction member could be form locked together eg by pressing to assist in location.

The element is preferably formed such that its height is less than its width. Preferably, it is generally triangular or trapezoidal in section and is provided with a flange at its base to increase its area of contact with the vessel base.

Preferably the sheath of the heating element is of aluminium, and most preferably the wall thickness of the sheath is greater than 0.75mm, more preferably around 1mm to accommodate deformation in creating a flange as described above.

The base member is preferably made from a material with a low thermal conductivity such as stainless steel.

In some embodiments, the base may be formed with a groove which receives the heating element, and the conduction member be arranged across the top of the heating element. In other embodiments, the base is formed with a peripheral step which receives the heating element.

Preferably the groove or step and the element are sized such that the conduction member lies flush with the adjacent region of the base. This allows a substantially planar conduction member to be used.

In one embodiment, the conduction member extends substantially around the whole groove or step, although an opening may be provided to allow the cold tails of the heating element to project through.

Some preferred embodiments of the invention will now be described, by wary of example only, with reference to the accompanying drawings in which:
Figure 1 shows a plan view of a heated base which is described for the purposes of reference only;
Figure 2 shows a sectional view along the line II-II of Figure 1;
Figure 3 shows a perspective view of the heat conduction member shown in Figures 1 and 2;
Figure 4 shows a plan view of the conduction member of Figure 3;
Figure 5 shows a sectional view along the line V-V in Figure 4;
Figure 6 shows a side view of a conduction member shown in Figure 4;
Figure 7 shows schematically an alternative element configuration;
Figure 8 shows a sectional view of an embodiment of the invention;
Figure 9 shows an underneath plan view of the arrangement of Figure 8, but with the control removed; and
Figure 10 shows a sectional view of a further embodiment of the invention.

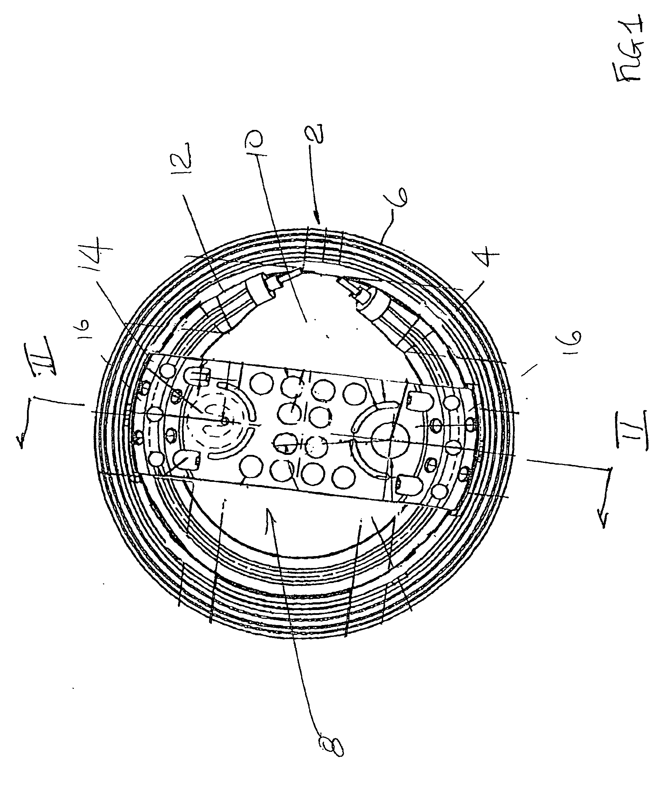

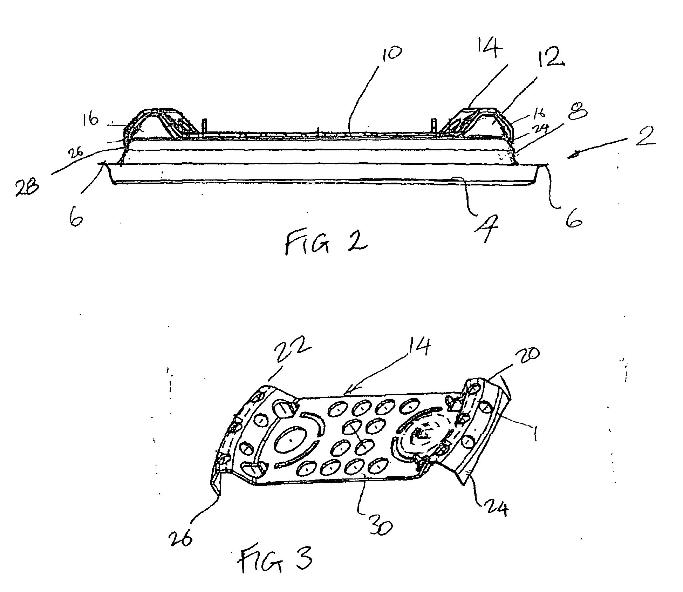

With reference to Figures 1 and 2, a heated base 2 for mounting in the base of a plastics or metallic liquid heating vessel (not shown) is described for reference purposes only. The heated base 2 comprises a stainless steel base member 4 having a mounted flange 6 for mounting in the vessel body.

The underside 8 of the base member 4 is dished, having a flat bottom surface 10. A generally triangular cross-sectioned annular aluminium sheathed heating element 12 is mounted around the periphery of the underside of the base member 4. A generally rectangular heat conduction member 14 is also mounted to the undersurface 10, extending completely across the undersurface 10 and over and around opposed portions 16 of the heating element 12.

The heating element 12 is generally triangular in section and is formed with an aluminium sheath arranged around a heating wire and electrical insulating material in a known manner. Both the element 12 and the heater conduction member 14 are soldered onto the flat undersurface 10 as will be described further below.

Turning now to the heat conduction member 14, this is shown in greater detail in Figures 3 to 6. The heat conduction member 14 is formed as a strip of a thermally highly conductive material such as aluminium or copper or alloys thereof. In this particular embodiment it is formed of an aluminium strip about 1 mm in thickness.

The conduction member comprises two end portions 20, 22 which engage over the heating element 12. The end portions 20, 22 are, therefore, formed into a shaped generally complementary to that of the heating element. The end regions 20, 22 are provided with respective locating lips 24, 26 which as can be seen in Figure 2 extend down over the side wall 28 of the underside 8 of the base member 4, thereby assisting in locating the conduction member 14 on the base member 4.

The central region 30 of the heat conduction member 14 is provided with mounting locations 32, 34 for receiving bimetallic actuators 36 of a thermally sensitive control for the liquid heating vessel. In this particular embodiment, the arrangement is intended for use with one of the Applicants U17 or U18 series of controls, whose mode of operation is described in detail in W095/34187. Such controls comprise a pair of spaced apart bimetallic actuators 36 which sense the temperature of the base of a liquid heating vessel and operate in the event that they sense too high a temperature in order to interrupt the power supply to the heater of the vessel. The position of one such actuator 36 is shown in dotted line in figures for illustrative purposes.

The mounting locations 32, 34 comprise respective apertures 38, 40 in the conduction member 14, surrounded by respective arcuate apertures 42, 44. The central apertures 38, 40 allow the satisfactory seating of the actuators 36 on the heat conduction member 14. The arcuate apertures 42, 44, serve to restrict the flow of heat from the mounting locations into the centre 30 of the conduction member 14 thereby assuring a faster response time in an overheat situation.

It will also be seen that the thermally conductive member 14 is provided with a number of apertures 50 arranged over the rest of its surface. This acts to reduce material costs and, furthermore, will allow the escape of fluxes etc. during the manufacturing process as will be described further below.

The conduction member 14 is also provided with mounting tabs 50 which may be used to mount the control to the conduction plate, thereby avoiding the need for any additional means of mounting for the control to the base member.

The conduction member 14 and the element 12 are soldered to the underside 8 of the base member 4. In particular, the surface of the conduction plate 14 which faces the vessel base 4, and the element 14 may be coated with a suitable solder paste, the two components then assembled together onto the vessel base, which can then be heated to an appropriate temperature to melt the solder. Fluxes and excess solder can escape through the apertures 50 provided in the conduction plate 14 so as to provide a firm connection. Furthermore, the apertures 50 in the respective end regions 20, 22 of the heat conduction member allow fluxes to escape from between the heat conduction member 14 and the element 12.

In use, the base 2 is mounted in the bottom of a liquid heating vessel via its mounting flange 6 in a conventional manner. A thermally sensitive control e.g. an Applicant's U17 or U18 series control is then mounted to the heat conduction plate via the mounting lugs 54. When liquid is being heated in the vessel, the temperature of the mounting locations 32, 34 for the bimetallic actuators 36 of the thermally sensitive control will be kept relatively cool due the thermal contact of the conduction member 14 with the base member 4 in that region. However, in the event that the liquid heating vessel boils dry or is switched on without any liquid in it, heat will be conducted from the heating element 12 into the mounting location for the bimetals through the heat conduction member 14, and there will be no cooling effect through the base member 4. In due course, therefore, the mounting locations will reach a temperature sufficiently high to operate the bimetallic actuators 36 which will then act to disconnect the power supply to the heater.

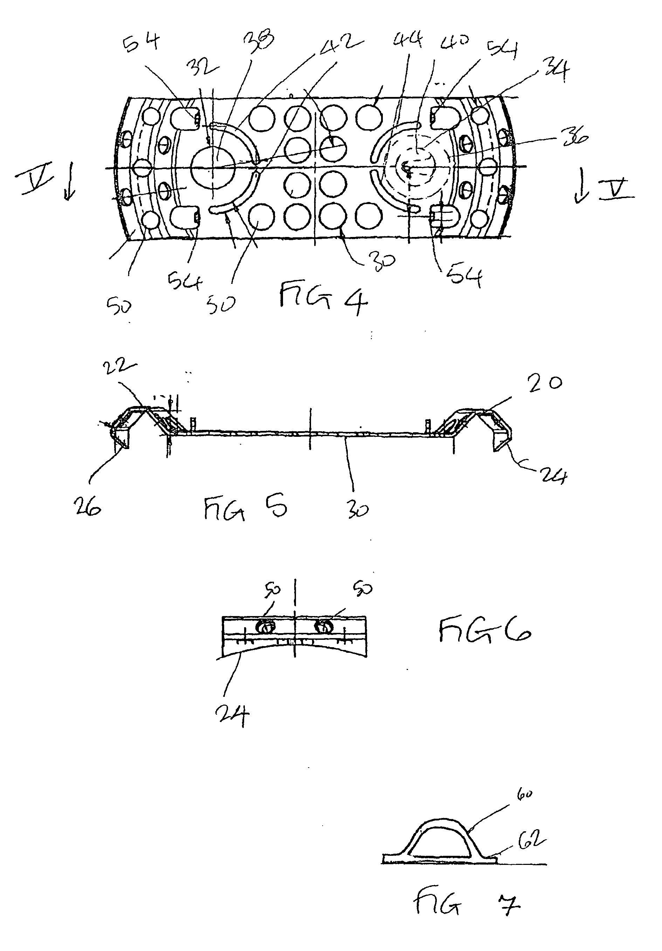

It will be appreciated that various modifications can be made to the arrangement shown in the Figures 1 to 6. For example, the heat conduction member may be adapted merely to receive a single bimetallic actuator or other form of control. The particular shape of the element may vary from that shown. Figure 7 shows an alternative geometry for the heater. In this arrangement, the element 60 is formed with a mounting flange 62 at its base, to increase the surface area of contact with the base 8 of the vessel. Typically the sheath will be made of aluminium, again typically with walls about 1 mm thick which will accommodate the pressing necessary to produce the mounting flange 62.

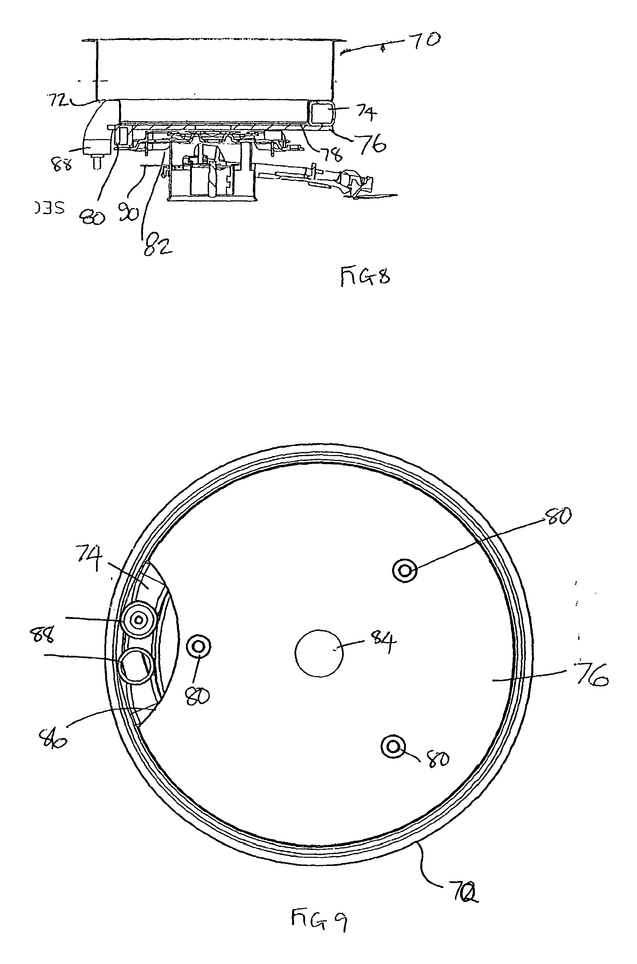

The shape of the base member may also be different to that shown in Figures 1 to 6. With reference to Figures 8 and 9, the base member 70 of an embodiment of the invention is deeper than that of the earlier described arrangement, and is provided with a peripheral step 72. An annular sheathed heating element 74 is brazed or otherwise secured into the step 72, as shown, preferably along both contact surfaces.

A planar conduction member 76 of high thermal conductivity material is mounted over the lower surface of the heating element 74 and is brazed to the lowermost surface 78 of the base member 70 and also to the element 74. The conduction member is provide with studs 80 for mounting a control unit 84. The control unit 18 illustrated in this embodiment is one of the Applicant's U18 control units. As mentioned above, the control unit comprises a pair of bimetallic actuators which, when the control is mounted in position, are arranged in good thermal contact with the conduction member 76.

As can be seen most clearly from Figure 9, the conduction member 76 is circular and covers substantially the entire base 70 apart from a central aperture 84 and a peripheral cut-out 86. The cut-out 86 allows the cold tails 88 of the heating element 74 to project below the conduction member 76 for connection to terminals 90 on the control unit 82.

This embodiment works in the same manner as the earlier arrangement, with heat being transferred to the actuators of the control unit 82 in an overheat situation through the conduction member 76, but heat entering the base 70 directly from the heating element 74 through the walls of the step 72 of the base 70.

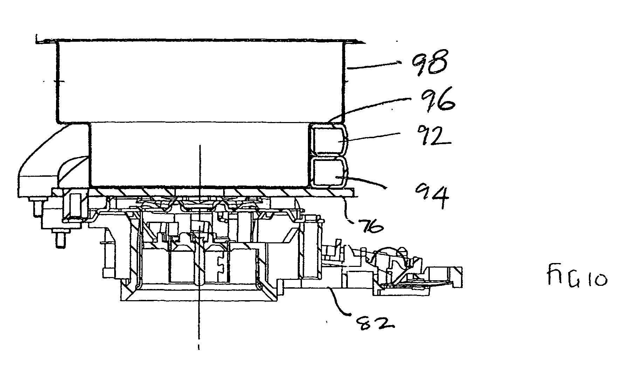

Figure 10 shows a further embodiment of the invention.

This is similar in construction and operation to the embodiment of Figure 8 except that in this embodiment, two heating elements, 92, 94 are arranged in a step 96 of a base member 98. The upper element 92 is typically a higher power, main, heating element while the lower element 94 is a lower power, simmer, element. The two elements 92, 94 are brazed into the step 96 and preferably to each other.

It will be understood that the conduction member 76 in the last two described embodiments may incorporate the various preferred features of the conduction member of the first arrangement. For example, they may extend only partially around the heating element(s). It may also incorporate features facilitating its attachment to the base member, for example small stand offs on its base facing surface to facilitate the distribution of braze during a brazing process.

Also, the invention may be applied to all manner of liquid heating vessels, for example kettles, coffee makers, deep fat fryers and so on.

## Claims

1. A liquid heating vessel having a heated base comprising a base member (70;98), a sheathed electric heating element (12;74;92,94) bonded directly to the underside of the base member (70;98) of the vessel for heating liquid contained in the vessel, and a heat conduction member (14;76) extending over, and in close thermal contact with, a portion of the sheathed heating element (12;74;92,94), and also arranged in close thermal contact with a portion of said base member (70;98) of the vessel,
**characterised in that** the base member (70;98) is formed with a groove or peripheral step (72;96), wherein said groove or peripheral step receives the heating element, and **in that** the base member is a separate component mounted in the base of the vessel.

2. A vessel as claimed in claim 1 wherein the heat conduction member (14;76) comprises a strip or plate mounted over a portion of the heating element.

3. A vessel as claimed in claim 1 or 2 wherein the heat conduction member (14;76) is a material having a high thermal conductivity such as aluminium, copper, or alloys thereof.

4. A vessel as claimed in any preceding claim wherein the heat conduction member (14;76) plate engages only a relatively small length of the heating element.

5. A vessel as claimed in claim 4 wherein the heat conduction member (14;76) engages less than 90°, preferably around 45°, circumferentially of the heating element (12;74;92,94).

6. A vessel as claimed in any preceding claim wherein the heat conduction member (14;76) extends over at least half the radial width of the heating element (12;74;92,94), and most preferably over the entire width of the element.

7. A vessel as claimed in claim 6 wherein the heat conduction member (14;76) extends radially beyond the element (12;74;92,94) and is attached to the base member (70;98) beyond the element (12;74;92,94).

8. A vessel as claimed in any preceding claim wherein the heat conduction member (14;76) is provided with locating means.

9. A vessel as claimed in claim 8 wherein the vessel base member (70;98) is dish shaped, and the location means of the heat conduction member (14;76) extends at least partially up the side of the dish.

10. A vessel as claimed in any preceding claim wherein a single conduction member (14;76) comprises mounting locations for a plurality of thermally sensitive control means.

11. A vessel as claimed in any preceding claim wherein said heat conduction member (14;76) is adapted to receive one or more bimetallic actuators (36) of thermally sensitive control means.

12. A vessel as claimed in claim 11 wherein said conduction member (14;76) comprises a pair of spaced apart locations (32,34) for receiving a pair of thermally sensitive actuators (36), said being linked by a bridge (30) of material.

13. A vessel as claimed in any preceding claim wherein the heat conduction member (14;76) is apertured.

14. A vessel as claimed in claim 13 wherein the heat conduction member (14;76) is provided with apertures (38,40) extending around the actuator mounting location (32,34).

15. A vessel as claimed in any preceding claim wherein the heat conduction member (14;76) also comprises means (50;80) for mounting a control thereon.

16. A vessel as claimed in claim 15 wherein said mounting means comprises one or more tabs (50).

17. A vessel as claimed in any preceding claim wherein the heat conduction member (14;76) is brazed or soldered in position on the element (12;74;92,94) and base member (70;98).

18. A vessel as claimed in claim 17 wherein the element (12;74;92,94) is also brazed or soldered onto the base member (70;98).

19. A vessel as claimed in any preceding claim wherein the element (12;74;92,94) is generally annular, extending around the periphery of the base member (70;98).

20. A vessel as claimed in any preceding claim wherein the element (12;74;92,94) is formed such that its height is less than its width.

21. A vessel as claimed in any preceding claim wherein the element (12;74;92,94) is generally triangular or trapezoidal in section.

22. A vessel as claimed in any preceding claim wherein the element (12;74;92,94) is provided with a flange at its base to increase its area of contact with the base member (70;98).

23. A vessel as claimed in any preceding claim wherein the sheath of the heating element (12;74;92,94) is of aluminium.

24. A vessel as claimed in claim 23 wherein the sheath thickness is greater than 0.75 mm, more preferably about 1 mm.

25. A vessel as claimed in any preceding claim wherein the base member (70;98) is generally planar.

26. A vessel as claimed in claim 1 wherein the conduction member (76) is arranged across the top of the heating element (74;92;94).

27. A vessel as claimed in claim 26 wherein the groove or step (72;96) and the element (74;92,94) are sized such that the conduction member (76) lies flush with the adjacent region of the base member (70;98).

28. A vessel as claimed in any preceding claim wherein the base member (70;98) is of stainless steel.

29. A liquid heating vessel as claimed in any preceding claim wherein the body of the liquid heating vessel is of plastics.

30. A liquid heating vessel as claimed in any preceding claim further comprising a thermally sensitive control (84) having at least one thermally sensitive actuator (32,34) mounted in thermal contact with the conduction member (14;76).

## Patentansprüche

1. Flüssigkeitsheizgefäß mit einer Heizbasis, umfassend ein Basiselement (70; 98), ein ummanteltes elektrisches Heizelement (12; 74; 92, 94), welches direkt mit der Unterseite des Basiselements (70; 98) des Gefäßes verbunden ist zum Aufheizen einer in dem Gefäß enthaltenen Flüssigkeit, und ein Wärmeleitelement (14; 76), welches sich über einen Abschnitt des ummantelten Heizelements (12; 74; 92, 94) erstreckt und mit diesem in engem thermischen Kontakt ist und auch in engem thermischen Kontakt mit einem Abschnitt des Basiselements (70; 98) des Gefäßes angeordnet ist,
**dadurch gekennzeichnet, dass** das Basiselement (70; 98) mit einer Nut oder einer Umfangsstufe (72; 96) ausgebildet ist, wobei die Nut oder Umfangsstufe das Heizelement aufnimmt, und dass das Basiselement eine separate Komponente ist, welche in die Basis des Gefäßes eingebaut ist.

2. Gefäß nach Anspruch 1, wobei das Wärmeleitelement (14; 76) einen Streifen oder eine Platte umfasst, welche über einem Abschnitt des Heizelements angebracht ist.

3. Gefäß nach Anspruch 1 oder 2, wobei das Wärmeleitelement (14; 76) ein Material mit einer hohen thermischen Leitfähigkeit wie z. B. Aluminium, Kupfer oder Legierungen von diesen ist.

4. Gefäß nach einem vorhergehenden Anspruch, wobei die Wärmeleitelementplatte (14; 76) nur mit einer relativ kleinen Länge des Heizelements im Eingriff ist.

5. Gefäß nach Anspruch 4, wobei das Wärmeleitelement (14; 76) mit weniger als 90°, vorzugsweise etwa 45° in Umfangsrichtung des Heizelements (12; 74; 92, 94) im Eingriff ist.

6. Gefäß nach einem vorhergehenden Anspruch, wobei das Wärmeleitelement (14; 76) sich über wenigstens die Hälfte der radialen Breite des Heizelements (12; 74; 92, 94) erstreckt und höchst vorzugsweise über die gesamte Breite des Elements erstreckt.

7. Gefäß nach Anspruch 6, wobei das Wärmeleitelement (14; 76) sich radial jenseits des Elements (12; 74; 92, 94) erstreckt und an dem Basiselement (70; 98) jenseits des Elements (12; 74; 92, 94) angebracht ist.

8. Gefäß nach einem vorhergehenden Anspruch, wobei das Wärmeleitelement (14; 76) mit einem Anordnungsmittel versehen ist.

9. Gefäß nach Anspruch 8, wobei das Gefäßbasiselement (70; 98) schalenförmig ist und das Anordnungsmittel des Wärmeleitelements (14; 76) sich wenigstens teilweise die Seite der Schale hinauf erstreckt.

10. Gefäß nach einem vorhergehenden Anspruch, wobei ein einzelnes Leitelement (14; 76) Befestigungsstellen für eine Mehrzahl von thermisch sensitiven Steuer/Regelmitteln umfasst.

11. Gefäß nach einem vorhergehenden Anspruch, wobei das Wärmeleitelement (14; 76) dafür bestimmt ist, ein oder mehrere bimetallische Stellelemente (36) von thermisch sensitiven Steuer/Regelmitteln aufzunehmen.

12. Gefäß nach Anspruch 11, wobei das Leitelement (14; 76) ein Paar voneinander beabstandete Stellen (32, 34) zur Aufnahme eines Paars von thermisch sensitiven Stellelementen (36) umfasst, welche durch eine Materialbrücke (30) verbunden sind.

13. Gefäß nach einem vorhergehenden Anspruch, wobei das Wärmeleitelement (14; 76) mit Öffnungen versehen ist.

14. Gefäß nach Anspruch 13, wobei das Wärmeleitelement (14; 76) mit Öffnungen (38, 40) versehen ist, die sich um die Stellelementbefestigungsstelle (32, 34) erstrecken.

15. Gefäß nach einem vorhergehenden Anspruch, wobei das Wärmeleitelement (14; 76) auch ein Mittel (50; 80) umfasst, um an diesem eine Steuerung/Regelung anzubringen.

16. Gefäß nach Anspruch 15, wobei das Befestigungsmittel ein oder mehrere Laschen (50) umfasst.

17. Gefäß nach einem vorhergehenden Anspruch, wobei das Wärmeleitelement (14; 76) in der richtigen Lage an das Element (12; 74; 92, 94) und das Basiselement (70; 98) hartgelötet oder gelötet ist.

18. Gefäß nach Anspruch 17, wobei das Element (12; 74; 92, 94) auch auf das Basiselement (70; 98) hartgelötet oder gelötet ist.

19. Gefäß nach einem vorhergehenden Anspruch, wobei das Element (12; 74; 92, 94) im Allgemeinen ringförmig ist und sich um den Umfang des Basiselements (70; 98) erstreckt.

20. Gefäß nach einem vorhergehenden Anspruch, wobei das Element (12; 74; 92, 94) so ausgebildet ist, dass seine Höhe geringer als seine Breite ist.

21. Gefäß nach einem vorhergehenden Anspruch, wobei das Element (12; 74; 92, 94) im Schnitt im Allgemeinen dreieckig oder trapezförmig ist.

22. Gefäß nach einem vorhergehenden Anspruch wobei das Element (12; 74; 92, 94) mit einem Flansch an seiner Basis versehen ist, um seine Kontaktfläche mit dem Basiselement (70; 98) zu vergrößern.

23. Gefäß nach einem vorhergehenden Anspruch, wobei die Ummantelung des Heizelements (12; 74; 92, 94) aus Aluminium besteht.

24. Gefäß nach Anspruch 23, wobei die Dicke der Ummantelung größer als 0,75 mm, bevorzugt etwa 1 mm ist.

25. Gefäß nach einem vorhergehenden Anspruch, wobei das Basiselement (70; 98) im Allgemeinen eben ist.

26. Gefäß nach Anspruch 1, wobei das Leitelement (76) über die Oberseite des Heizelements (74; 92; 94) hinweg angeordnet ist.

27. Gefäß nach Anspruch 26, wobei die Nut oder Stufe (72; 96) und das Element (74; 92, 94) so bemessen sind, dass das Leitelement (76) auf gleicher Höhe mit dem benachbarten Bereich des Basiselements (70; 98) liegt.

28. Gefäß nach einem vorhergehenden Anspruch, wobei das Basiselement (70; 98) aus rostfreiem Stahl besteht.

29. Flüssigkeitsheizgefäß nach einem vorhergehenden Anspruch, wobei der Körper des Flüssigkeitsheizgefäßes aus Kunststoff besteht.

30. Flüssigkeitsheizgefäß nach einem vorhergehenden Anspruch, ferner umfassend eine thermisch sensitive Steuerung/Regelung (84) mit wenigstens einem thermisch sensitiven-Stellelement (32, 34), welches in thermischem Kontakt mit dem Leitelement (14; 76) angebracht ist.

## Revendications

1. Récipient chauffant du liquide possédant une base chauffée comprenant une unité de base (70 ; 98), un élément chauffant électrique doté d'une gaine (12 ; 74 ; 92, 94) relié directement au côté inférieur de l'unité de base, (70 ; 98) du récipient permettant de chauffer le liquide contenu dans le récipient, une unité thermo-conductrice (14 ; 76) disposée en s'étendant sur, et en contact thermique immédiat avec, une partie de l'élément chauffant doté d'une gaine (12 ; 74 ; 92, 94), et également agencée en contact thermique immédiat avec une partie de ladite unité de base (70 ; 98) du récipient.
**caractérisé en ce que** l'unité de base (70 ; 98) est formée avec une rainure ou gradin périphérique (72 ; 96), dans lequel ladite rainure sur gradin périphérique reçoit l'élément chauffant, et **en ce que** l'unité de base est un composant séparable monté sur la base du récipient.

2. Récipient selon la revendication 1, dans lequel l'unité thermo-conductrice (14 ; 76) comprend une bande ou plaque montée sur une partie de l'élément chauffant.

3. Récipient selon l'une quelconque des revendications 1 ou 2, dans lequel l'unité thermo-conductrice (14 ; 76) est constituée d'un matériau ayant une forte conductivité thermique, tel que l'aluminium, le cuivre ou des alliages de ceux-ci.

4. Récipient selon l'une quelconque des revendications précédentes, dans lequel la plaque de l'unité thermo-conductrice (14 ; 76) s'engage seulement avec une longueur relativement faible de l'élément chauffant.

5. Récipient selon la revendication 4, dans lequel l'unité thermo-conductrice (14 ; 76) s'engage circonférentiellement avec l'élément chauffant (12 ; 74 ; 92, 94) sur moins de 90°, de préférence sur environ 45°.

6. Récipient selon l'une quelconque des revendications précédentes, dans lequel l'unité thermo-conductrice (14 ; 76) s'étend sur au moins la moitié de la largeur radiale de l'élément chauffant (12 ; 74 ; 92, 94), et de préférence sur toute la largeur de l'élément.

7. Récipient selon la revendication 6, dans lequel l'unité thermo-conductrice (14 ; 76) s'étend radialement au-delà de l'élément (12 ; 74; 92, 94) et est fixée à l'unité de base (70 ; 98) au-delà de l'élément (12 ; 74 ; 92, 94).

8. Récipient selon l'une quelconque des revendications précédentes, dans lequel l'unité thermo-conductrice (14 ;76) est dotée de moyens de positionnement.

9. Récipient selon la revendication 8, dans lequel l'unité de base (70 ; 98) du récipient se présente sous la forme d'une assiette, et les moyens de positionnement de l'unité thermo-conductrice (14 ; 76) s'étendent au moins en partie sur la hauteur du côté de l'assiette.

10. Récipient selon l'une quelconque des revendications précédentes, dans lequel une seule unité conductrice (14 ; 76) comprend des emplacements de montage pour une pluralité de moyens de commande thermo-sensibles.

11. Récipient selon l'une quelconque des revendications précédentes, dans lequel ladite unité thermo-conductrice (14 ; 76) est conçue pour recevoir un ou plusieurs actionneurs (36) bimétalliques des moyens de commande thermo-sensibles.

12. Récipient selon la revendication 11, dans lequel ladite unité conductrice (14 ; 76) comprend une paire d'emplacements (32, 34) espacés pour recevoir une paire d'actionneurs thermo-sensibles (36), ceux-ci étant reliés par un pont (30) réalisé dans un certain matériau.

13. Récipient selon l'une quelconque des revendications précédentes, dans lequel l'unité thermo-conductrice (14 ; 76) est perforée.

14. Récipient selon la revendication 13, dans lequel l'unité thermo-conductrice (14 ; 76) est dotée d'orifices (38, 40) s'étendant autour de l'emplacement (32, 34) de montage de l'actionneur.

15. Récipient selon l'une quelconque des revendications précédentes, dans lequel l'unité thérmo-conductrice (14 ; 76) comprend également des moyens (50 ; 80) permettant de monter un dispositif de commande sur celle-ci.

16. Récipient selon la revendication 15, dans lequel lesdits moyens de montage comprennent une ou plusieurs languettes (50).

17. Récipient selon l'une quelconque des revendications précédentes, dans lequel l'unité thermo-conductrice (14 ; 76) est brasée ou soudée en place sur l'élément (12 ; 74 ; 92, 94) et l'unité de base (70 ; 98).

18. Récipient selon la revendication 17, dans lequel l'élément (12 ; 74 ; 92, 94) est également brasé ou soudé sur l'unité de base (70 ; 98).

19. Récipient selon l'une quelconque des revendications précédentes, dans lequel l'élément (12 ; 74 ; 92, 94) est généralement annulaire, en s'étendant autour de la périphérie de l'unité de base (70 ; 98).

20. Récipient selon l'une quelconque des revendications précédentes, dans lequel l'élément (12 ; 74 ; 92, 94) est formé de telle sorte que sa hauteur est inférieure à sa largeur.

21. Base (2) selon l'une quelconque des revendications précédentes, dans lequel l'élément (12 ; 79 ; 92, 94) est généralement triangulaire ou trapézoïdale en coupe.

22. Récipient selon l'une quelconque des revendications précédentes, dans lequel l'élément (12 ; 74 ; 92, 94) est doté d'une bride au niveau de sa base pour faire augmenter la surface de contact avec l'unité de base (70 ; 98).

23. Récipient selon l'une quelconque des revendications précédentes, dans lequel la gaine de l'élément chauffant (12 ; 74 ; 92, 94) est en aluminium.

24. Récipient selon la revendication 23, dans lequel l'épaisseur de la gaine est supérieure à 0,75 mm, de préférence d'environ 1 mm.

25. Récipient selon l'une quelconque des revendications précédentes, dans lequel l'unité de base (70 ; 98) est généralement plane.

26. Récipient selon la revendication 1 dans lequel l'unité conductrice (76) est agencée en travers de la partie supérieure de l'élément chauffant (74 ; 92, 94).

27. Récipient selon la revendication 26, dans lequel la rainure ou le gradin (72 ; 96) et l'élément (74 ; 92, 94) sont dimensionnés de telle sorte que l'unité conductrice (76) est alignée avec la région adjacente de l'unité de base (70 ; 98).

28. Récipient selon l'une quelconque des revendications précédentes, dans lequel l'unité de base (70 ; 98) est en acier inoxydable.

29. Récipient chauffant du liquide selon l'une quelconque des revendications précédentes, dans lequel le corps du récipient chauffant du liquide est réalisé en matière plastique.

30. Récipient chauffant du liquide selon l'une quelconque des revendications précédentes, comprenant en outre un dispositif de commande thermo-sensible (84), ayant au moins un actionneur thermo-sensible (32, 34) monté en contact thermique avec l'unité conductrice (14 ; 76).
